# EUROPÄISCHE PATENTANMELDUNG

(11) **EP 4 481 952 A1**
(43) Veröffentlichungstag der Anmeldung: **25.12.2024**
(21) Anmeldenummer: 24176016.4
(22) Anmeldetag: 15.05.2024
(51) Int. Cl.: H01R 13/46, G06K 19/06, H01R 13/629, H01R 13/641, H01R 43/26

(54) **SICHERUNGSVORRICHTUNG MIT ANZEIGEELEMENT UND OPTISCH VERÄNDERNDEM ELEMENT**

(30) Priorität: 06.06.2023 DE 102023114790
(71) Anmelder: Lisa Dräxlmaier GmbH, 84137 Vilsbiburg (DE)
(72) Erfinder: Neumayer, Franziska, 84144 Geisenhausen (DE); Wimmer, Stefan, 84098 Hohenthann (DE); Wilhelm, Sebastian, 66625 Nohfelden (DE)

(57) **Zusammenfassung**

Die Offenbarung betrifft eine Sicherungsvorrichtung (100) zur Sicherung einer Verriegelung eines Verriegelungselements (110), wobei die Sicherungsvorrichtung (100) Folgendes umfasst: ein Verriegelungselement (110), das von einer ersten Verriegelungsstellung (111) in eine zweite Verriegelungsstellung (112) bewegbar ist, wobei das Verriegelungselement (110) in der zweiten Verriegelungsstellung (112) eine Verriegelung bewirkt; ein Anzeigeelement (120) zum Anzeigen einer Information; und ein optisch veränderndes Element (212), das in der ersten Verriegelungsstellung (111) des Verriegelungselements (110) eine Darstellung des Anzeigeelements (120) optisch verändert, so dass das Anzeigeelement (120) nicht in der Lage ist, eine Information anzuzeigen; wobei das optisch verändernde Element (212) in der zweiten Verriegelungsstellung (112) des Verriegelungselements (110) die Darstellung des Anzeigeelements (120) nicht optisch verändert, so dass das Anzeigeelement (120) eine Information anzeigt.

## Beschreibung

### Technisches Gebiet

Die vorliegende Erfindung betrifft eine Sicherungsvorrichtung mit Anzeigeelement und optisch veränderndem Element. Die Sicherungsvorrichtung dient zur Sicherung einer Verriegelung eines Verriegelungselements bzw. zur "Steckerpositions-Kontrolle" oder "Connector Position Assurance (CPA)" und ist zur Sicherung einer Verriegelung eines Steckergehäuses an einem Gegen-Steckergehäuse einsetzbar. Insbesondere betrifft die Erfindung eine CPA mit erfasstem Element, das optisch manipuliert wird.

### Stand der Technik

CPAs ("Connector Position Assurance") sollen verhindern, dass sich ein an einem Gegen-Steckergehäuse verrastetes Steckergehäuse unbeabsichtigt von dem Gegen-Steckergehäuse löst, was beispielsweise aufgrund von Vibrationen, temperaturbedingter Ausdehnung oder Schrumpfung, das Ziehen an einem im Steckergehäuse untergebrachten Kabel oder andere mechanische Einwirkungen passieren kann. Die CPA ist dafür zuständig als letztes zu bedienendes Element den Stecker mit seinem Gegenstück zu verriegeln. Um hier ein sicheres Verriegeln zu gewährleisten, wird gefordert, dass der finale Zustand der Verriegelung durch ein scanbares Element erfasst wird und dieses Element nur lesbar sein darf, wenn die CPA final geschlossen ist.

### Beschreibung der Erfindung

Eine Aufgabe der Erfindung ist es daher, eine geeignete Vorrichtung zu schaffen, mit der zuverlässig erkannt werden kann, ob eine Verriegelung vorliegt oder nicht, insbesondere für Stecker, bei denen eine CPA-Verriegelung erforderlich ist.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Durch die Anforderung, dass der Stecker einen hohen Automatisierungsgrad in Herstellung und Konfektionierung benötigt, ist die Verwendung eines scanbaren Elementes zwingend notwendig als Kontrollfunktion. Die hier vorgestellte Erfindung betrifft eine Sicherungsvorrichtung mit Anzeigeelement und optisch veränderndem Element, wobei das Anzeigeelement durch das optisch verändernde Element optisch verändert wird und als scanbares Element genutzt werden kann, um somit eine zuverlässige Kontrolle des Stecker-Herstellungsprozesses zu gewährleisten und ein Scannen des Stecksystems im zusammengebauten Zustand zu ermöglichen. Die hier vorgestellte Lösung kann auf verschiedene Stecksysteme angewendet werden und lässt sich leicht von einem Stecksystem auf ein anderes Stecksystem adaptieren.

Grundprinzip der erfinderischen Lösung ist die optische Manipulation des erfassbaren Elementes bzw. des Anzeigeelements. Solange die CPA nicht in Endlage ist, kann das zu erfassende Element nicht in der Art und Weise erkannt werden, dass es das gewünschte Feedback gibt. Erst in Endlage der CPA wird das Element richtig dargestellt. Die Kopie kann somit erkannt werden, denn jegliche optische Manipulation eines zu erfassenden Elementes erfolgt in Kombination mit der CPA-Funktion.

Das Anzeigeelement befindet sich auf der CPA und wird durch ein Element (hier als optisch veränderndes Element bezeichnet), das sich beispielsweise auf dem Bügel befindet, optisch verändert. Durch diese optische Veränderung ist das zu erfassende Element (hier als Anzeigeelement bezeichnet) nicht richtig erkennbar und gibt kein Feedback. Erst nachdem die CPA betätigt wurde, ist das Element richtig dargestellt und kann erfasst werden.

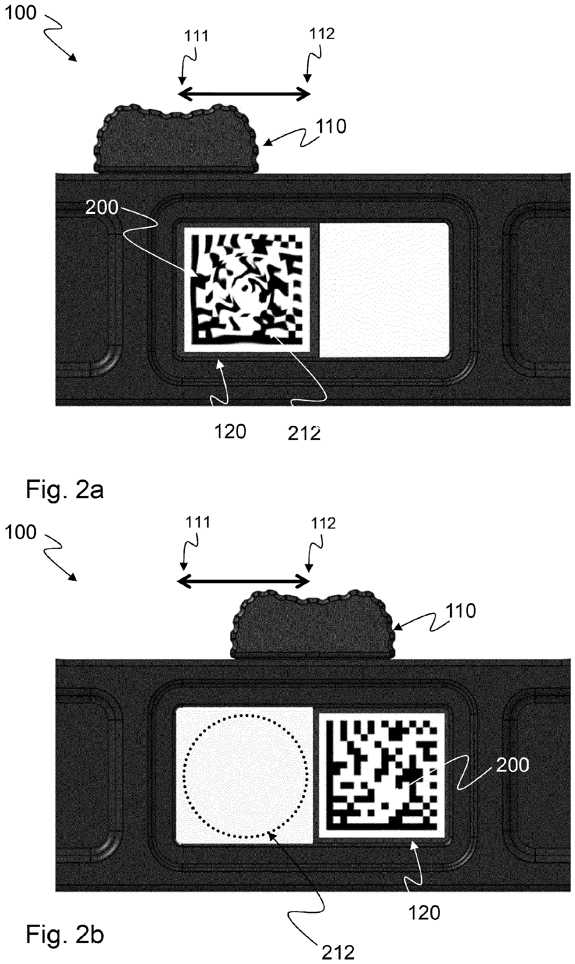

Wie unten zu den Figuren 2a und 2b näher beschrieben, wird das Anzeigeelement nicht verdeckt es ist immer sichtbar. Allerdings wird durch beispielsweise eine Linse, Prisma oder einem milchigen Element die Darstellung des zu erfassenden Elements (im Beispiel durch einen DMC dargestellt) nach außen optisch verändert.

Gemäß einem ersten Aspekt wird die oben beschriebene Aufgabe gelöst durch eine Sicherungsvorrichtung zur Sicherung einer Verriegelung eines Verriegelungselements, wobei die Sicherungsvorrichtung Folgendes umfasst: ein Verriegelungselement, das von einer ersten Verriegelungsstellung in eine zweite Verriegelungsstellung bewegbar ist, wobei das Verriegelungselement in der zweiten Verriegelungsstellung eine Verriegelung bewirkt; ein Anzeigeelement zum Anzeigen einer Information; und ein optisch veränderndes Element, das in der ersten Verriegelungsstellung des Verriegelungselements eine Darstellung des Anzeigeelements optisch verändert, so dass das Anzeigeelement nicht in der Lage ist, eine Information anzuzeigen; wobei das optisch verändernde Element in der zweiten Verriegelungsstellung des Verriegelungselements die Darstellung des Anzeigeelements nicht optisch verändert, so dass das Anzeigeelement die Information anzeigt.

Eine solche Sicherungsvorrichtung bietet den technischen Vorteil, dass ein sicheres und zuverlässiges Erkennen einer Verriegelung möglich ist. Das Anzeigeelement lässt sich über ein scanbares Element erfassen, so dass eine zuverlässige automatische Erkennung der Stellung des Verriegelungselements möglich ist. Damit lässt sich insbesondere eine automatische Erfassung des Zustands von Steckern, bei denen eine CPA-Verriegelung erforderlich ist, durchführen. Die Sicherungsvorrichtung erfüllt somit die Anforderungen, die an eine CPA-Verriegelung gestellt werden. Die Information kann beispielsweise eine bestehende oder nicht bestehende Verriegelung durch das Verriegelungselement umfassen.

Ein optisch veränderndes Element, wie hier beschrieben, ist ein optisches Element, das die optische Darstellung des Anzeigeelements mittels optischer Verfahren verändert, so dass das Anzeigeelement eine andere optische Darstellung hat als ohne eine solche optische Veränderung. Die geänderte optische Darstellung führt dazu, dass der Informationsgehalt, den das Anzeigeelement optisch darstellt, durch ein scanbares Element nicht mehr erfasst werden kann. Eine optische Veränderung ist beispielsweise eine optische Verzerrung, eine Lichtbrechung, eine optische Trübung oder anderes. Der Informationsgehalt, den das Anzeigeelement darstellt, ist beispielsweise ein Code, z.B. in zweidimensionaler Form, wie ein DMC oder ein Barcode oder ähnliches. Durch die optische Veränderung kann dieser Code nicht mehr von einem scanbaren Element erkannt werden bzw. gelesen werden.

Gemäß einer beispielhaften Ausführungsform der Sicherungsvorrichtung ist das Anzeigeelement in beiden Verriegelungsstellungen des Verriegelungselements nicht verdeckt und bleibt stets sichtbar.

Dies bietet den technischen Vorteil, dass keine Abdeckung des Anzeigeelements notwendig ist, um den gewünschten Effekt der Nicht-Erkennbarkeit zu erzielen. Die optische Veränderung in der Darstellung reicht bereits aus, um das Anzeigeelement unkenntlich zu machen, so dass es von einem scanbaren Element nicht mehr erfassbar bzw. scanbar ist.

Gemäß einer beispielhaften Ausführungsform der Sicherungsvorrichtung umfasst das optisch verändernde Element eine optische Linse oder ein optisches Prisma, die oder das in der ersten Verriegelungsstellung des Verriegelungselements über dem Anzeigeelement positioniert ist und zumindest einen Teil der Darstellung des Anzeigeelements optisch verzerrt.

Dies bietet den technischen Vorteil, dass eine Linse und ein Prisma leicht herzustellen sind und wirkungsvoll zu einer Verzerrung der Darstellung des Anzeigeelements führen, so dass die optische Information des Anzeigeelements von einem Lesegerät nicht mehr erkannt werden kann.

Gemäß einer beispielhaften Ausführungsform der Sicherungsvorrichtung umfasst das optisch verändernde Element ein opakes optisches Element, welches in der ersten Verriegelungsstellung des Verriegelungselements über dem Anzeigeelement positioniert ist und eine optische Trübung zumindest eines Teils der Darstellung des Anzeigeelements bewirkt.

Dies bietet den technischen Vorteil, dass ein solches opakes optisches Element leicht herstellbar ist und wirkungsvoll zu einer Trübung der Darstellung des Anzeigeelements führt, so dass die optische Information des Anzeigeelements von einem Lesegerät nicht mehr erkannt werden kann.

Die Opazität, auch Trübung oder Beschattung genannt, bezeichnet das Gegenteil von Transparenz, also mangelnde Durchsichtigkeit bzw. mangelnde Durchlässigkeit. Ein opakes optisches Element ist also ein optisches Element, das zu einer Trübung, Verdunkelung oder Verschwommenheit in der optischen Darstellung führt. Ein Beispiel eines solchen opaken optischen Elements ist Milchglas, auch als opakes Weißglas bezeichnet, das lichtdurchlässig, aber undurchsichtig ist. Ebenfalls undurchsichtig ist Trübglas, ein milchig weißes Glas. Milchglas ist beispielsweise ein durch Beimischung eines trübenden Stoffes gefärbtes Glas oder durch Aufrauen der Oberfläche undurchsichtig gemachtes Glas oder ein Verbund einer transparenten mit einer weißen Glasschicht.

Gemäß einer beispielhaften Ausführungsform der Sicherungsvorrichtung umfasst das Anzeigeelement ein Erkennungsmerkmal, das in der ersten Verriegelungsstellung des Verriegelungselements durch das optisch verändernde Element derart optisch verändert ist, dass es nicht mehr lesbar ist.

Dies bietet den technischen Vorteil, dass das Anzeigeelement alle Arten von Informationen übertragen kann, beispielsweise Informationen über die Art der Verriegelung, die Bezeichnung der Bauteile, etc.

Gemäß einer beispielhaften Ausführungsform der Sicherungsvorrichtung umfasst das Erkennungsmerkmal einen Code mit mehreren Elementen, beispielsweise einen ein-, zwei- oder drei-dimensionalen Code oder insbesondere einen Data Matrix Code, DMC.

Der Data Matrix Code ist einer der bekanntesten 2D-Codes und lässt sich für dauerhafte und robuste Direktbeschriftungen einsetzen. Der DMC ist in der Größe variabel und lässt somit eine Vielzahl von Symbol-Elementen zu.

Gemäß einer beispielhaften Ausführungsform der Sicherungsvorrichtung ist das Anzeigeelement an dem Verriegelungselement angebracht und ist in der ersten Verriegelungsstellung unter dem optisch verändernden Element positioniert; und eine Bewegung des Verriegelungselements von der ersten Verriegelungsstellung in die zweite Verriegelungsstellung bewegt das Anzeigeelement von dem optisch verändernden Element weg.

Dies bietet den technischen Vorteil, dass das Anzeigeelement sicher und robust eine Verriegelung anzeigen kann. In der ersten Verriegelungsstellung befindet es sich unter dem optisch verändernden Element und ist in der Darstellung unkenntlich, so dass keine Verriegelung durch ein scanbares Element erkannt werden kann. In der zweiten Verriegelungsstellung ist es unter dem optisch verändernden Element hervorgeschoben bzw. von dem optisch verändernden Element wegbewegt, so dass es durch das scanbare Element klar erkannt und eingelesen werden kann, welches in dieser Stellung sicher eine Verriegelung erkennt.

Gemäß einer beispielhaften Ausführungsform der Sicherungsvorrichtung ist das Anzeigeelement erkennbar, wenn die Darstellung des Anzeigeelements nicht durch das optisch verändernde Element optisch verändert ist.

Dies bietet den technischen Vorteil, dass der Zustand des Verriegelungselements sich sicher und zuverlässig erkennen lässt, beispielsweise mit einem Lesegerät oder einem Scanner. Damit kann eine automatisierte Montage von Stecksystemen effizient kontrolliert werden.

Gemäß einer beispielhaften Ausführungsform der Sicherungsvorrichtung ist die Sicherungsvorrichtung ausgebildet, eine Steckerpositions-Sicherung (CPA) zur Sicherung einer Verriegelung eines Steckergehäuses an einem Gegen-Steckergehäuse vorzunehmen.

Dies bietet den technischen Vorteil, dass der Zustand der CPA sich sicher durch ein scanbares Element erfassen lässt, welches nur dann lesbar ist, wenn die CPA final geschlossen ist.

Gemäß einer beispielhaften Ausführungsform der Sicherungsvorrichtung umfasst die Sicherungsvorrichtung ferner: ein Spannelement zum Einspannen des Steckergehäuses in das Gegen-Steckergehäuse, wobei das Spannelement von einer offenen Spannelementstellung, in der das Steckergehäuse in das Gegen-Steckergehäuse einführbar ist, in eine geschlossene Spannelementstellung, in der das Steckergehäuse elektrisch kontaktierend mit dem Gegen-Steckergehäuse fixiert ist, bewegbar ist; wobei das Verriegelungselement an dem Spannelement angebracht ist und ausgebildet ist, das Spannelement zu verriegeln oder zu entriegeln.

Dies bietet den technischen Vorteil, dass das Anzeigeelement zuverlässig eine Information über eine Verriegelung des Spannelements, beispielsweise eines Bügels, anzeigen kann, so dass der Zustand des Spannelements sich mit einem scanbaren Element effizient erfassen lässt.

Gemäß einer beispielhaften Ausführungsform der Sicherungsvorrichtung ist das Verriegelungselement in der geschlossenen Spannelementstellung von der ersten Verriegelungsstellung in die zweite Verriegelungsstellung bewegbar und ist ausgebildet, in der zweiten Verriegelungsstellung das Spannelement in der geschlossenen Spannelementstellung zu verriegeln, und in der ersten Verriegelungsstellung das Spannelement für eine Bewegung in die offene Spannelementstellung zu entriegeln.

Dies bietet den technischen Vorteil, dass ein sicheres Verbinden des Steckergehäuses mit dem Gegen-Steckergehäuse über das Spannelement gewährleistet ist. Die Sicherungsvorrichtung erfüllt somit die Anforderungen, die an eine CPA-Verriegelung gestellt werden.

Gemäß einer beispielhaften Ausführungsform der Sicherungsvorrichtung ist das optisch verändernde Element an dem Spannelement angebracht; und das Anzeigeelement ist an dem Verriegelungselement angebracht; und wobei eine Bewegung des Verriegelungselements von der ersten Verriegelungsstellung in die zweite Verriegelungsstellung das Anzeigeelement unter dem optisch verändernden Element hervorschiebt, so dass die Darstellung des Anzeigeelements nicht durch das optisch verändernde Element optisch verändert ist.

Dies bietet den technischen Vorteil, dass das Anzeigeelement sicher und robust eine Verriegelung anzeigen kann. In der ersten Verriegelungsstellung befindet es sich unter dem optisch verändernden Element und ist in der Darstellung unkenntlich, so dass keine Verriegelung durch ein scanbares Element erkannt werden kann. In der zweiten Verriegelungsstellung ist es unter dem optisch verändernden Element hervorgeschoben, so dass es nicht mehr von diesem Element optisch verändert wird und durch das scanbare Element sicher gelesen werden kann und damit eine Verriegelung erkannt werden kann.

Gemäß einem zweiten Aspekt wird die oben beschriebene Aufgabe gelöst durch eine Steckverbindung mit einem Steckergehäuse und einem Gegen-Steckergehäuse, die über eine Sicherungsvorrichtung gemäß dem ersten Aspekt miteinander verbunden und gesichert sind.

Gemäß einem dritten Aspekt wird die oben beschriebene Aufgabe gelöst durch ein Sicherungssystem umfassend eine Sicherungsvorrichtung gemäß dem ersten Aspekt und ein Lesegerät, wobei das Lesegerät ausgebildet ist, das Anzeigeelement zu erfassen, wenn sich das Verriegelungselement in der zweiten Verriegelungsstellung befindet, um eine Verriegelung zu erkennen.

Gemäß einer beispielhaften Ausführungsform des Sicherungssystems ist das Lesegerät ausgebildet, das Anzeigeelement nur dann zu erfassen, wenn sich das Verriegelungselement in der zweiten Verriegelungsstellung befindet und nur in dieser Stellung eine korrekte Verriegelung zu erfassen.

### Kurze Figurenbeschreibung

Im Folgenden wird die Erfindung anhand von Ausführungsbeispielen und den Figuren näher beschrieben. Es zeigen:
- Fig. 1: eine schematische Darstellung der Zustände einer erfindungsgemäßen Sicherungsvorrichtung 100;
- Fig. 2a: eine Darstellung einer erfindungsgemäßen Sicherungsvorrichtung 100 gemäß einer ersten Ausführungsform in der ersten Verriegelungsstellung mit optisch veränderter Darstellung des Anzeigeelements 120;
- Fig. 2b: eine Darstellung der erfindungsgemäßen Sicherungsvorrichtung 100 aus Figur 2a in der zweiten Verriegelungsstellung ohne optisch veränderte Darstellung des Anzeigeelements 120;
- Fig. 3a: eine Darstellung einer erfindungsgemäßen Sicherungsvorrichtung 100 gemäß einer zweiten Ausführungsform in der ersten Verriegelungsstellung mit optisch veränderter Darstellung des Anzeigeelements 120;
- Fig. 3b: eine Darstellung der erfindungsgemäßen Sicherungsvorrichtung 100 aus Figur 3a in der zweiten Verriegelungsstellung ohne optisch veränderte Darstellung des Anzeigeelements 120;
- Fig. 4a: eine Darstellung einer erfindungsgemäßen Sicherungsvorrichtung 100 gemäß einer dritten Ausführungsform in der ersten Verriegelungsstellung mit optisch veränderter Darstellung des Anzeigeelements 120;
- Fig. 4b: eine Darstellung der erfindungsgemäßen Sicherungsvorrichtung 100 aus Figur 4a in der zweiten Verriegelungsstellung ohne optisch veränderte Darstellung des Anzeigeelements 120;
- Fig. 5a: eine 3D-Darstellung einer Sicherungsvorrichtung 100 umfassend ein Verriegelungselement 110, ein Anzeigeelement 120 und ein Spannelement 300 in geschlossener Spannbügelstellung und Verriegelungselement 110 in einer ersten Verriegelungsstellung 111; und
- Fig. 5b: eine 3D-Darstellung der Sicherungsvorrichtung 100 aus Figur 5a, bei der sich das Verriegelungselement 110 in einer zweiten Verriegelungsstellung 112 befindet.

Die Figuren sind lediglich schematische Darstellungen und dienen nur der Erläuterung der Erfindung. Gleiche oder gleichwirkende Elemente sind durchgängig mit den gleichen Bezugszeichen versehen.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

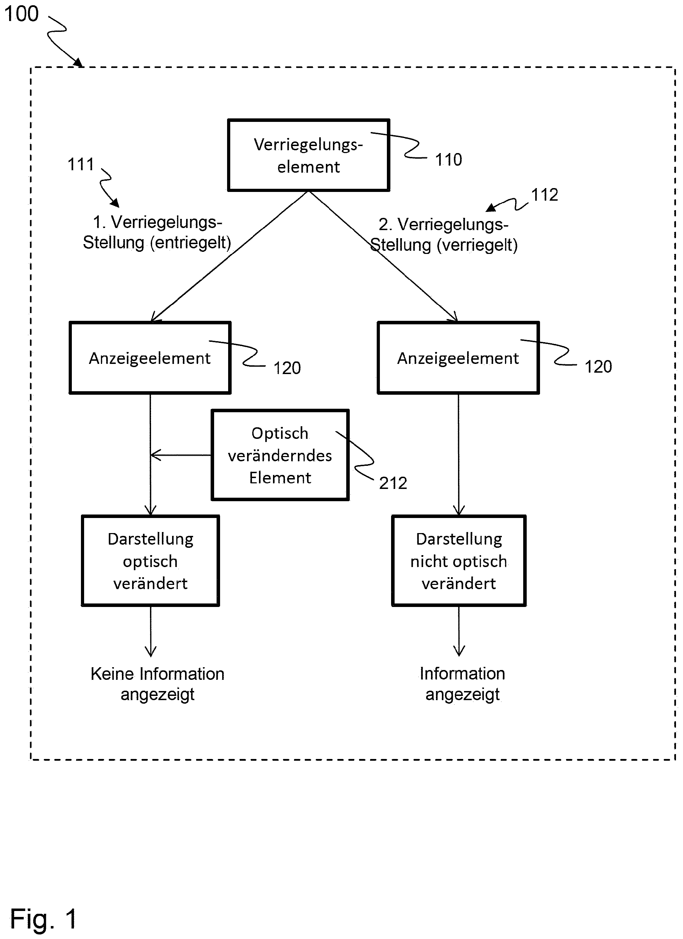

Fig. 1 zeigt eine schematische Darstellung der Zustände einer erfindungsgemäßen Sicherungsvorrichtung 100.

Die Sicherungsvorrichtung 100 dient zur Sicherung einer Verriegelung eines Verriegelungselements 110. Die Sicherungsvorrichtung 100 umfasst ein Verriegelungselement 110, ein Anzeigeelement 120 und ein optisch veränderndes Element 212.

Das Verriegelungselement 110 ist von einer ersten Verriegelungsstellung 111 in eine zweite Verriegelungsstellung 112 bewegbar und bewirkt in der zweiten Verriegelungsstellung 112 eine Verriegelung.

Das Anzeigeelement 120 dient zum Anzeigen einer Information, beispielsweise einer Information über eine Verriegelung durch das Verriegelungselement 110. Die Information kann in jeder geeigneten Form dargestellt werden.

Das optisch verändernde Element 212 verändert in der ersten Verriegelungsstellung 111 des Verriegelungselements 110 eine Darstellung des Anzeigeelements 120 optisch derart, dass das Anzeigeelement 120 nicht in der Lage ist, eine Information anzuzeigen.

Das optisch verändernde Element 212 verändert in der zweiten Verriegelungsstellung 112 des Verriegelungselements 110 nicht die optische Darstellung des Anzeigeelements 120, so dass das Anzeigeelement 120 die Information anzeigt.

Das Anzeigeelement 120 ist in beiden Verriegelungsstellungen 111, 112 des Verriegelungselements 110 nicht verdeckt und bleibt stets sichtbar.

Verschiedene Ausführungen des optisch verändernden Elements 212 und dazugehörige Beschreibung sind in den Figuren 2a, 2b, 3a, 3b, 4a und 4b näher dargestellt und beschrieben.

In den in den Figuren 2a, 2b, 3a, 3b, 4a und 4b gezeigten Sicherungsvorrichtungen 100 wird das Anzeigeelement 120 nicht verdeckt und ist immer sichtbar. Allerdings wird durch beispielsweise eine Linse, Prisma oder ein milchiges Element die Darstellung des zu erfassenden Elements 120 (im Beispiel durch einen DMC dargestellt) nach außen optisch verändert.

Die Figuren 2a und 2b zeigen Darstellungen einer erfindungsgemäßen Sicherungsvorrichtung 100 gemäß einer ersten Ausführungsform in der ersten Verriegelungsstellung (Figur 2a) mit optisch veränderter Darstellung des Anzeigeelements 120 und in der zweiten Verriegelungsstellung (Figur 2b) ohne optisch veränderte Darstellung des Anzeigeelements 120.

Die Sicherungsvorrichtung 100 in Figur 2a und Figur 2b entspricht der oben zu Figur 1 beschriebenen Sicherungsvorrichtung, wobei in Figur 2a und Figur 2b die Struktur dieser Sicherungsvorrichtung 100 näher dargestellt ist.

Wie bereits oben zu Figur 1 beschrieben, dient die Sicherungsvorrichtung 100 zur Sicherung einer Verriegelung eines Verriegelungselements 110. Die Sicherungsvorrichtung 100 umfasst ein Verriegelungselement 110, ein Anzeigeelement 120 und ein optisch veränderndes Element 212, wie in den Figuren 2a und 2b dargestellt.

Das Verriegelungselement 110 ist von einer ersten Verriegelungsstellung 111 in eine zweite Verriegelungsstellung 112 bewegbar und bewirkt in der zweiten Verriegelungsstellung 112 eine Verriegelung. In Figur 2a ist das Verriegelungselement 110 in der ersten Verriegelungsstellung dargestellt, in Figur 2b in der zweiten Verriegelungsstellung.

Das Anzeigeelement 120 dient zum Anzeigen einer Information, beispielsweise einer Information betreffend eine Verriegelung oder Nicht-Verriegelung durch das Verriegelungselement 110.

Das optisch verändernde Element 212 verändert in der ersten Verriegelungsstellung 111 des Verriegelungselements 110 (siehe Figur 2a) eine Darstellung des Anzeigeelements 120 optisch derart, dass das Anzeigeelement 120 nicht in der Lage ist, eine Information anzuzeigen.

Das optisch verändernde Element 212 verändert in der zweiten Verriegelungsstellung 112 des Verriegelungselements 110 (siehe Figur 2b) nicht die optische Darstellung des Anzeigeelements 120, so dass das Anzeigeelement 120 die Information anzeigt.

Das Anzeigeelement 120 ist in beiden Verriegelungsstellungen 111, 112 des Verriegelungselements 110 nicht verdeckt und bleibt stets sichtbar, wie aus den Figuren 2a und 2b zu sehen.

Das optisch verändernde Element 212 ist in der Ausführungsform der Figuren 2a und 2b eine optische Linse, die in der ersten Verriegelungsstellung 111 des Verriegelungselements 110 (siehe Figur 2a) über dem Anzeigeelement 120 positioniert ist und zumindest einen Teil der Darstellung des Anzeigeelements 120 optisch verzerrt. In Figur 2a und 2b ist zu sehen, dass die Linse 212 in der Mitte über dem Anzeigeelement angebracht ist. Es versteht sich, dass auch andere Positionen möglich sind, beispielsweise in einer Ecke über dem Anzeigeelement oder über einer Seite des Anzeigeelements 120. Es können auch mehrere solcher optischer Linsen über dem Anzeigeelement angebracht sein, die auch in unterschiedlicher Größe vorliegen können.

Wie in den Figuren 2a und 2b zu sehen, umfasst das Anzeigeelement 120 ein Erkennungsmerkmal 200, beispielsweise einen Code, zum Beispiel einen ein-, zwei- oder auch drei-dimensionalen Code, der in der ersten Verriegelungsstellung 111 des Verriegelungselements 110 (siehe Figur 2a) durch das optisch verändernde Element 212 derart optisch verändert ist, dass er nicht mehr lesbar ist. Ein Lesegerät kann den Code zwar noch in seinen Umrissen erfassen, ihn jedoch nicht mehr einlesen und erkennen.

Der zwei-dimensionale Code 200 kann beispielsweise ein Data Matrix Code, DMC sein. Es kann sich aber beispielsweise auch um einen Barcode handeln.

Ein solcher Data Matrix Code besteht beispielsweise aus den folgenden Hauptkomponenten:
1) zwei Paare fester durchgehender und unterbrochener Kanten als Begrenzungslinien (Finder Pattern bzw. Positionsmarker). Die festen Begrenzungslinien dienen zur Abgrenzung. Sie werden für die Ausrichtung und Entzerrung des Data Matrix Codes verwendet, so dass jeder Lesewinkel möglich ist.
2) eine umlaufende Ruhezone (Quiet Zone). Diese leere Zone umgibt den Data Matrix Code. Sie enthält keinerlei Informationen oder Muster. Die Breite der Ruhezone beträgt mindestens eine Spalte bzw. eine Zeile (besser die vierfache Breite bzw. Höhe eines Moduls) und wird zur Abgrenzung von anderen optischen Bildelementen der Umgebung benötigt.
3) die den geschlossenen Kanten gegenüberliegende Ecke. Diese Ecke erlaubt das schnelle Erkennen der Codeschemata. Beim Codeschema ECC 200 mit einer geraden Anzahl Zeilen und Spalten ist das Element in der oberen rechten Ecke stets weiß. Bei den anderen genormten Codeschemata mit einer ungeraden Zeilen- und Spaltenzahl ist das Element in der oberen rechten Ecke stets schwarz.
4) die Ausrichtungsmuster (Alignment Pattern). Diese paarweise Kombination durchgehender und unterbrochener Linien in beiden Richtungen waagerecht und senkrecht erleichtern die Bildauswertung. Sie unterteilen große Datenfelder bei Codes mit mindestens 32 Modulen Kantenlänge in gleich große Teile.
5) der Datenbereich. Dieser Datenbereich enthält die eigentliche binäre Information in kodierter Form. Je nach Größe der Matrix definiert sich damit auch die Anzahl der möglichen Informationen.

Wie aus den Figuren 2a und 2b ersichtlich, ist das Anzeigeelement 120 an dem Verriegelungselement 110 angebracht und ist in der ersten Verriegelungsstellung 111 unter dem optisch verändernden Element 212 positioniert (siehe Figur 2a).

Eine Bewegung des Verriegelungselements 110 von der ersten Verriegelungsstellung 111 in die zweite Verriegelungsstellung 112 bewegt das Anzeigeelement 120 von dem optisch verändernden Element 212 weg (siehe Übergang von Figur 2a zu Figur 2b).

Das Anzeigeelement 120 ist erkennbar und kann beispielsweise mit einem Lesegerät gelesen werden, wenn die Darstellung des Anzeigeelements 120 nicht durch das optisch verändernde Element 212 optisch verändert ist, d.h., wenn sich das Verriegelungselement 110 in der zweiten Verriegelungsstellung 112 befindet, wie in Figur 2b dargestellt.

Insbesondere zeigen Figuren 2a und 2b die CPA. Auf der CPA befindet sich der DMC. Der DMC ist sichtbar, wird allerdings durch eine Linse, die sich auf dem Bügel (schwarz) befindet, optisch verändert. Durch diese optische Änderung ist der Code in dieser Stellung nicht lesbar. Lediglich nachdem die CPA betätigt wurde (Figur 2b) ist er lesbar, da die Linse die Darstellung nicht mehr beeinflusst.

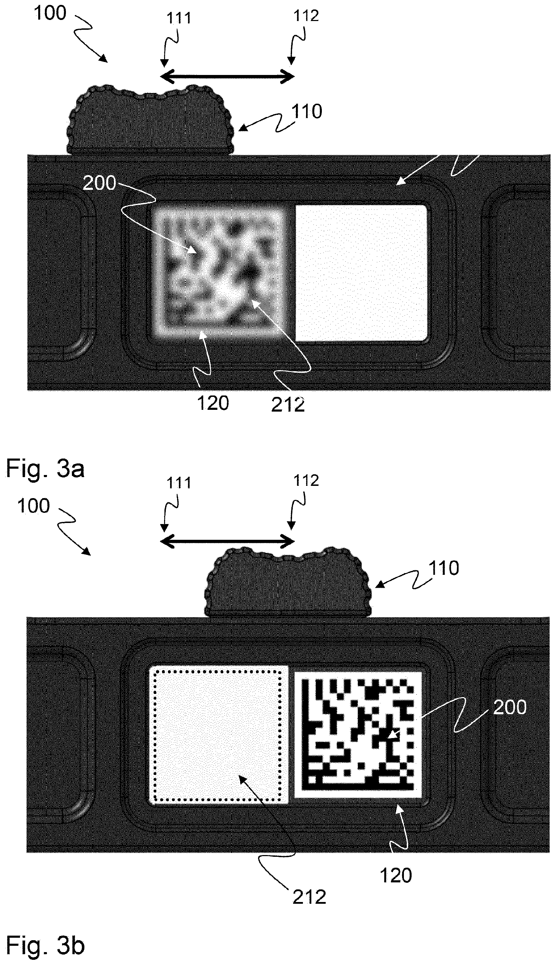

Die Figuren 3a und 3b zeigen Darstellungen einer erfindungsgemäßen Sicherungsvorrichtung 100 gemäß einer zweiten Ausführungsform in der ersten Verriegelungsstellung (Figur 3a) mit optisch veränderter Darstellung des Anzeigeelements 120 und in der zweiten Verriegelungsstellung (Figur 3b) ohne optisch veränderte Darstellung des Anzeigeelements 120.

Die Sicherungsvorrichtung 100 in Figur 3a und Figur 3b entspricht der oben zu den Figuren 2a und 2b beschriebenen Sicherungsvorrichtung, wobei in Figur 3a und Figur 3b das optisch verändernde Element 212 keine optische Linse ist, sondern ein optisches Prisma.

Wie bereits oben zu den Figuren 2a und 2b beschrieben, dient die Sicherungsvorrichtung 100 zur Sicherung einer Verriegelung eines Verriegelungselements 110. Die Sicherungsvorrichtung 100 umfasst ein Verriegelungselement 110, ein Anzeigeelement 120 und ein optisch veränderndes Element 212, wie in den Figuren 3a und 3b dargestellt. Das Verriegelungselement 110 ist von einer ersten Verriegelungsstellung 111 in eine zweite Verriegelungsstellung 112 bewegbar und bewirkt in der zweiten Verriegelungsstellung 112 eine Verriegelung. In Figur 3a ist das Verriegelungselement 110 in der ersten Verriegelungsstellung dargestellt, in Figur 3b in der zweiten Verriegelungsstellung. Das Anzeigeelement 120 dient zum Anzeigen einer Information, beispielsweise einer Information über eine Verriegelung oder Nicht-Verriegelung durch das Verriegelungselement 110.

Das optisch verändernde Element 212, hier in den Figuren 3a und 3b, ein optisches Prisma, verändert in der ersten Verriegelungsstellung 111 des Verriegelungselements 110 (siehe Figur 3a) eine Darstellung des Anzeigeelements 120 optisch derart, dass das Anzeigeelement 120 nicht in der Lage ist, eine Information anzuzeigen.

Das optisch verändernde Element 212, hier in den Figuren 3a und 3b, ein optisches Prisma, verändert in der zweiten Verriegelungsstellung 112 des Verriegelungselements 110 (siehe Figur 3b) nicht die optische Darstellung des Anzeigeelements 120, so dass das Anzeigeelement 120 eine Information anzeigen kann.

Ein solches optisches Prisma ist ein optisches Bauelement in Form des geometrischen Körpers Prisma, das für unterschiedliche optische Effekte eingesetzt wird, z. B. als dispersives Element, das Licht nach Wellenlängen auffächert oder zur Umlenkung eines Lichtstrahls. Die optischen Eigenschaften des Prismas hängen im Wesentlichen ab von den Dreieckswinkeln bzw. der Lage der optisch wirksamen Prismenflächen zueinander und vom Brechungsindex des Werkstoffes, zum Beispiel Glas oder transparenter Kunststoff.

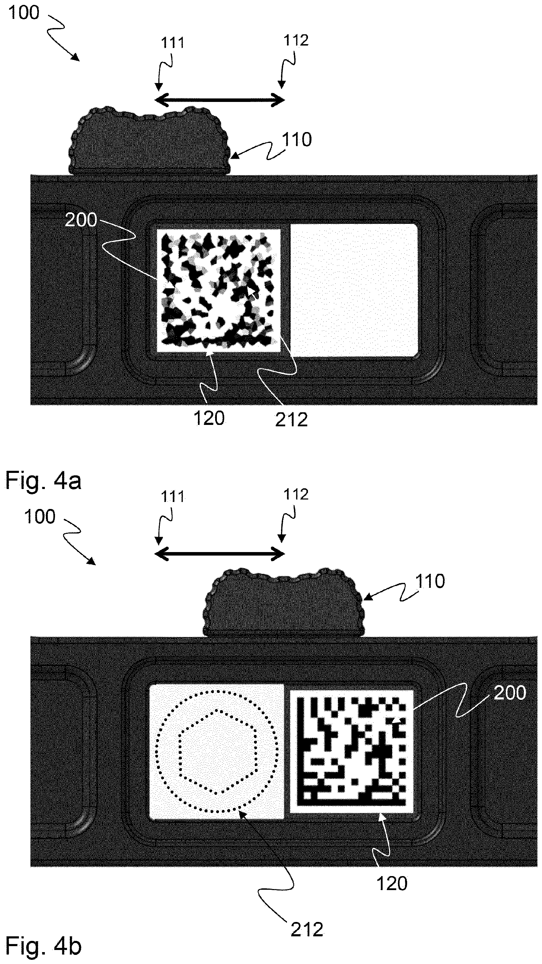

Die Figuren 4a und 4b zeigen Darstellungen einer erfindungsgemäßen Sicherungsvorrichtung 100 gemäß einer dritten Ausführungsform in der ersten Verriegelungsstellung (Figur 4a) mit optisch veränderter Darstellung des Anzeigeelements 120 und in der zweiten Verriegelungsstellung (Figur 4b) ohne optisch veränderte Darstellung des Anzeigeelements 120.

Die Sicherungsvorrichtung 100 in Figur 4a und Figur 4b entspricht der oben zu den Figuren 2a und 2b sowie 3a und 3b beschriebenen Sicherungsvorrichtung, wobei in Figur 4a und Figur 4b das optisch verändernde Element 212 keine optische Linse oder Prisma ist, sondern ein opakes optisches Element, beispielsweise Milchglas.

Wie bereits oben zu den Figuren 2a und 2b beschrieben, dient die Sicherungsvorrichtung 100 zur Sicherung einer Verriegelung eines Verriegelungselements 110. Die Sicherungsvorrichtung 100 umfasst ein Verriegelungselement 110, ein Anzeigeelement 120 und ein optisch veränderndes Element 212, wie in den Figuren 4a und 4b dargestellt. Das Verriegelungselement 110 ist von einer ersten Verriegelungsstellung 111 in eine zweite Verriegelungsstellung 112 bewegbar und bewirkt in der zweiten Verriegelungsstellung 112 eine Verriegelung. In Figur 4a ist das Verriegelungselement 110 in der ersten Verriegelungsstellung 111 dargestellt, in Figur 4b in der zweiten Verriegelungsstellung 112. Das Anzeigeelement 120 dient zum Anzeigen einer Information, beispielsweise einer Information über eine Verriegelung oder Nicht-Verriegelung durch das Verriegelungselement 110. Auch andere Informationen können über das Anzeigeelement 120 angezeigt werden.

Das opake optische Element 212 führt zu einer Trübung, Beschattung, Verdunkelung oder Verschwommenheit in der optischen Darstellung des Anzeigeelements 110, also mangelnder Durchsichtigkeit bzw. mangelnder Lichtdurchlässigkeit, so dass es nicht mehr von einem scanbaren Element gelesen werden kann. Es kann sich hier beispielsweise um Milchglas handeln, auch als opakes Weißglas bezeichnet, das lichtdurchlässig, aber undurchsichtig ist. Ferner kann es sich um Trübglas handeln, ein undurchsichtiges milchiges weißes Glas. Das opake optische Element kann beispielsweise durch Beimischung eines trübenden Stoffes zu Glas hergestellt werden. Das optisch opake Element kann durch Aufrauen der Oberfläche undurchsichtig gemachtes Glas sein oder ein Verbund einer transparenten mit einer weißen Glasschicht.

Das optisch verändernde Element 212, hier in den Figuren 4a und 4b, das opake optische Element, verändert in der ersten Verriegelungsstellung 111 des Verriegelungselements 110 (siehe Figur 4a) eine Darstellung des Anzeigeelements 120 optisch derart, dass das Anzeigeelement 120 nicht in der Lage ist, eine Information anzuzeigen.

Das optisch verändernde Element 212, hier in den Figuren 4a und 4b, das opake optische Element, verändert in der zweiten Verriegelungsstellung 112 des Verriegelungselements 110 (siehe Figur 4b) nicht die optische Darstellung des Anzeigeelements 120, so dass das Anzeigeelement 120 eine Information anzeigen kann.

Wie in den Figuren 2a, 2b, 3a, 3b und 4a, 4b dargestellt, gibt es verschiedene Ausführungsmöglichkeiten für die Sicherungsvorrichtung 100. In den gezeigten Beispielen befindet sich über dem Anzeigeelement 120 immer ein transparentes Element, das die Darstellung ändert (hier als optisch veränderndes Element 212 bezeichnet). Somit wird das Anzeigeelement 120 nicht aufgedeckt, da sich immer etwas darüber befindet. Etwas aufdecken bedeutet allerdings auch etwas sichtbar machen. In diesem Ansatz ist der DMC immer sichtbar; es wird lediglich die Darstellung in irgendeiner Art und Weise verzerrt bzw. optisch verändert. In den gezeigten Beispielen befindet sich die CPA im Bügel (schwarz) und macht eine seitliche Bewegung; dafür gibt es natürlich auch X-Varianten.

Mit der Sicherungsvorrichtung 100, wie oben zu den Figuren 1 bis 4b beschrieben, und einem Lesegerät kann ein Sicherungssystem implementiert werden, das den Zustand des Verriegelungselements 110 sicher bestimmen und zur weiteren Verarbeitung beispielsweise an eine Steuerung übertragen kann. Ein solches Sicherungssystem umfasst eine Sicherungsvorrichtung 100 wie oben beschrieben und ein Lesegerät. Das Lesegerät ist dabei ausgebildet, das Anzeigeelement 120 zu erfassen, wenn sich das Verriegelungselement 110 in der zweiten Verriegelungsstellung befindet, d.h., wenn das Anzeigeelement 120 erfassbar ist, um so eine Verriegelung zu erkennen.

Das Lesegerät kann dabei ausgebildet sein, das Anzeigeelement 120 nur dann zu erfassen, wenn sich das Verriegelungselement 110 in der zweiten Verriegelungsstellung 112 befindet und nur in dieser Stellung 112 eine korrekte Verriegelung zu erfassen.

Das Lesegerät kann die erfassten Informationen, beispielsweise den ausgelesenen 2D-Code an eine Steuerung weitergeben, die dann bei fehlerhafter Erfassung einen Fehler anzeigen kann und entsprechende Schritte ausführen kann, um den Herstellungsprozess zu steuern.

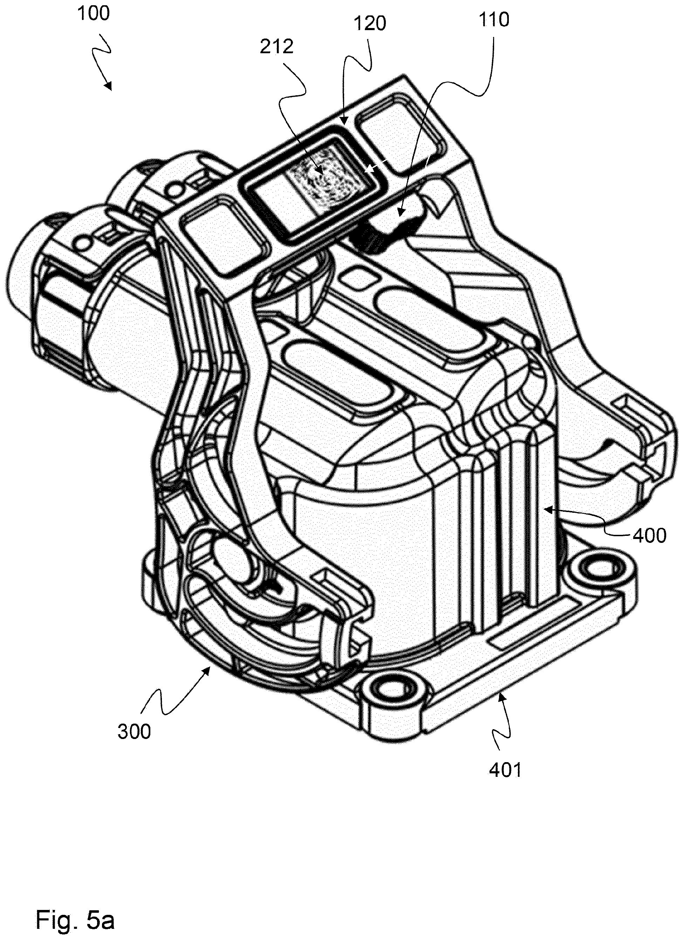

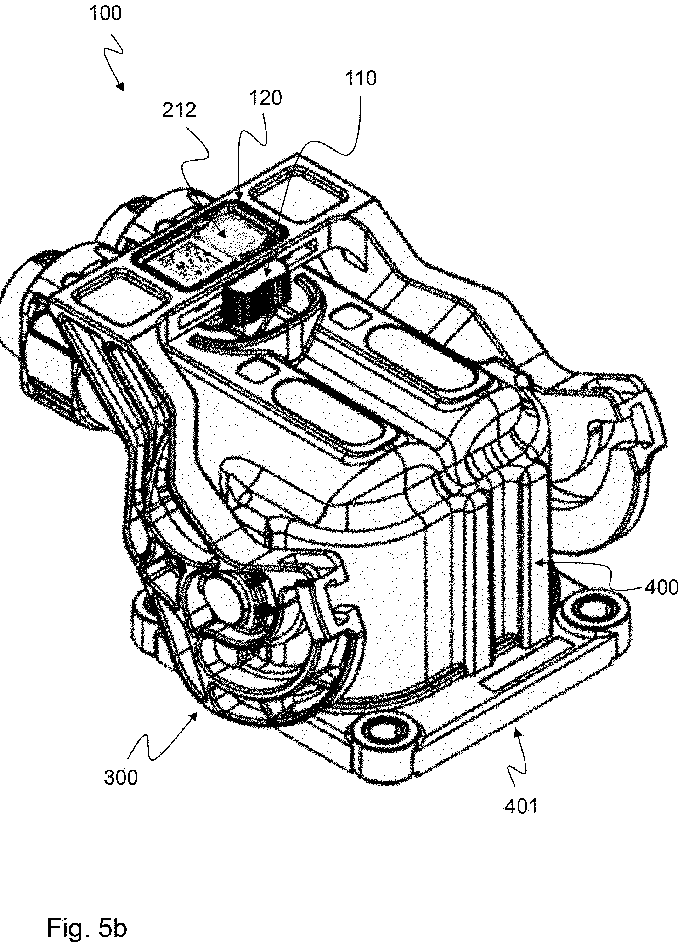

Die Figuren 5a und 5b zeigen 3D-Darstellungen einer Sicherungsvorrichtung 100 umfassend ein Verriegelungselement 110, ein Anzeigeelement 120 und ein Spannelement 300 in geschlossener Spannbügelstellung. Das Verriegelungselement 110 ist in Figur 5a in der ersten Verriegelungsstellung 111 dargestellt. Es kann von der ersten Verriegelungsstellung 111 in die zweite Verriegelungsstellung 112 bewegt werden. Die zweite Verriegelungsstellung 112 ist in Figur 5b dargestellt.

Die Sicherungsvorrichtung 100 ist ausgebildet, eine Steckerpositions-Sicherung (CPA) zur Sicherung einer Verriegelung eines Steckergehäuses 400 an einem Gegen-Steckergehäuse 401 vorzunehmen.

Die Sicherungsvorrichtung 100 umfasst neben den bereits oben beschriebenen Verriegelungselement 110, Anzeigeelement 120 und optisch veränderndem Element 212 auch ein Spannelement 300, beispielsweise einen Spannbügel, zum Einspannen des Steckergehäuses 400 in das Gegen-Steckergehäuse 401.

Das Spannelement 300 ist von einer offenen Spannelementstellung, in der das Steckergehäuse 400 in das Gegen-Steckergehäuse 401 einführbar ist, in eine geschlossene Spannelementstellung, in der das Steckergehäuse 400 elektrisch kontaktierend mit dem Gegen-Steckergehäuse 401 fixiert ist, bewegbar.

Das Verriegelungselement 110 ist an dem Spannelement 300 angebracht, wie in den Figuren 5a und 5b dargestellt, und ist ausgebildet, das Spannelement 300 zu verriegeln oder zu entriegeln.

Das Anzeigeelement 120 zeigt eine Information an, beispielsweise eine Information über eine Verriegelung oder Nicht-Verriegelung des Spannelements 300 durch das Verriegelungselement 110. Das Anzeigeelement 120 kann beispielsweise entsprechend der Darstellung in den Figuren 2a bis 4b ausgestaltet sein. Es kann beispielsweise in eine Tafel am Spannelement 300 integriert sein, wie in den Figuren 5a und 5b dargestellt.

Das Verriegelungselement 110 ist in der geschlossenen Spannelementstellung von der ersten Verriegelungsstellung 111 (wie in Figur 5a dargestellt) in die zweite Verriegelungsstellung 112 (wie in Figur 5b dargestellt) bewegbar. Das Verriegelungselement 110 ist ausgebildet, in der zweiten Verriegelungsstellung 112 das Spannelement 300 in der geschlossenen Spannelementstellung zu verriegeln, und in der ersten Verriegelungsstellung 111 das Spannelement 300 für eine Bewegung in die offene Spannelementstellung zu entriegeln. In Figur 5a ist eine Zwischenstellung des Spannelements 300 dargestellt, in welches es bei einer Entriegelung des Verriegelungselements 110 gebracht werden kann. In Figur 5a ist das Erkennungsmerkmal nicht erkennbar.

Das optisch verändernde Element 212 ist an dem Spannelement 300 angebracht, wie in den Figuren 5a und 5b zu sehen. Ferner ist das Anzeigeelement 120 an dem Verriegelungselement 110 angebracht, wie in Figuren 5a und 5b zu sehen. Das optisch verändernde Element 212 verändert das Erkennungsmerkmal in Figur 5a, so dass es nicht erkennbar ist. Somit ist eine Information, insbesondere eine Information über eine Verriegelung nicht erkennbar.

Bei einer Bewegung des Verriegelungselements 110 von der ersten Verriegelungsstellung 111 (siehe Figur 5a) in die zweite Verriegelungsstellung 112 (siehe Figur 5b) wird das Anzeigeelement 120 unter dem optisch verändernden Element 212 hervorgeschoben, wie in Figur 5b dargestellt, so dass die Darstellung des Anzeigeelements 120 nicht durch das optisch verändernde Element 212 optisch verändert ist und die Information erkennbar ist.

Die Figuren 5a und 5b zeigen somit auch eine Steckverbindung mit einem Steckergehäuse 400 und einem Gegen-Steckergehäuse 401, die über die Sicherungsvorrichtung 100 wie oben beschrieben miteinander verbunden und gesichert sind.

### BEZUGSZEICHENLISTE

- 100: Sicherungsvorrichtung
- 110: Verriegelungselement
- 111: erste Verriegelungsstellung (entriegelt)
- 112: zweite Verriegelungsstellung (verriegelt)
- 120: Anzeigeelement
- 200: 2D-Code oder DMC
- 212: optisch veränderndes Element, z.B. Linse, Prisma, Milchglas
- 300: Spannelement bzw. Spannbügel
- 400: Steckergehäuse
- 401: Gegen-Steckergehäuse

## Patentansprüche

1. Sicherungsvorrichtung (100) zur Sicherung einer Verriegelung eines Verriegelungselements (110), wobei die Sicherungsvorrichtung (100) Folgendes umfasst:
ein Verriegelungselement (110), das von einer ersten Verriegelungsstellung (111) in eine zweite Verriegelungsstellung (112) bewegbar ist, wobei das Verriegelungselement (110) in der zweiten Verriegelungsstellung (112) eine Verriegelung bewirkt;
ein Anzeigeelement (120) zum Anzeigen einer Verriegelung durch das Verriegelungselement (110); und
ein optisch veränderndes Element (212), das in der ersten Verriegelungsstellung (111) des Verriegelungselements (110) eine Darstellung des Anzeigeelements (120) optisch verändert, so dass das Anzeigeelement (120) nicht in der Lage ist, eine Information anzuzeigen;
wobei das optisch verändernde Element (212) in der zweiten Verriegelungsstellung (112) des Verriegelungselements (110) die Darstellung des Anzeigeelements (120) nicht optisch verändert, so dass das Anzeigeelement (120) die Information anzeigt.

2. Sicherungsvorrichtung (100) nach Anspruch 1,
wobei das Anzeigeelement (120) in beiden Verriegelungsstellungen (111, 112) des Verriegelungselements (110) nicht verdeckt ist und stets sichtbar bleibt.

3. Sicherungsvorrichtung (100) nach Anspruch 1 oder 2,
wobei das optisch verändernde Element (212) eine optische Linse oder ein optisches Prisma umfasst, die oder das in der ersten Verriegelungsstellung (111) des Verriegelungselements (110) über dem Anzeigeelement (120) positioniert ist und zumindest einen Teil der Darstellung des Anzeigeelements (120) optisch verzerrt.

4. Sicherungsvorrichtung (100) nach einem der vorstehenden Ansprüche,
wobei das optisch verändernde Element (212) ein opakes optisches Element umfasst, welches in der ersten Verriegelungsstellung (111) des Verriegelungselements (110) über dem Anzeigeelement (120) positioniert ist und eine optische Trübung zumindest eines Teils der Darstellung des Anzeigeelements (120) bewirkt.

5. Sicherungsvorrichtung (100) nach einem der vorstehenden Ansprüche,
wobei das Anzeigeelement (120) ein Erkennungsmerkmal (200) umfasst, das in der ersten Verriegelungsstellung (111) des Verriegelungselements (110) durch das optisch verändernde Element (212) derart optisch verändert ist, dass es nicht mehr lesbar ist.

6. Sicherungsvorrichtung (100) nach Anspruch 5,
wobei das Erkennungsmerkmal (200) einen Code umfasst.

7. Sicherungsvorrichtung (100) nach einem der vorstehenden Ansprüche,
wobei das Anzeigeelement (120) an dem Verriegelungselement (110) angebracht ist und in der ersten Verriegelungsstellung (111) unter dem optisch verändernden Element (212) positioniert ist; und
wobei eine Bewegung des Verriegelungselements (110) von der ersten Verriegelungsstellung (111) in die zweite Verriegelungsstellung (112) das Anzeigeelement (120) von dem optisch verändernden Element (212) wegbewegt.

8. Sicherungsvorrichtung (100) nach einem der vorstehenden Ansprüche,
wobei das Anzeigeelement (120) erkennbar ist, wenn die Darstellung des Anzeigeelements (120) nicht durch das optisch verändernde Element (212) optisch verändert ist.

9. Sicherungsvorrichtung (100) nach einem der vorstehenden Ansprüche,
wobei die Sicherungsvorrichtung (100) ausgebildet ist, eine Steckerpositions-Sicherung (CPA) zur Sicherung einer Verriegelung eines Steckergehäuses (400) an einem Gegen-Steckergehäuse (401) vorzunehmen.

10. Sicherungsvorrichtung (100) nach Anspruch 9, ferner umfassend:
ein Spannelement (300) zum Einspannen des Steckergehäuses (400) in das Gegen-Steckergehäuse (401), wobei das Spannelement (300) von einer offenen Spannelementstellung, in der das Steckergehäuse (400) in das Gegen-Steckergehäuse (401) einführbar ist, in eine geschlossene Spannelementstellung, in der das Steckergehäuse (400) elektrisch kontaktierend mit dem Gegen-Steckergehäuse (401) fixiert ist, bewegbar ist; und
wobei das Verriegelungselement (110) an dem Spannelement (300) angebracht ist und ausgebildet ist, das Spannelement (300) zu verriegeln oder zu entriegeln.

11. Sicherungsvorrichtung (100) nach Anspruch 10,
wobei das Verriegelungselement (110) in der geschlossenen Spannelementstellung von der ersten Verriegelungsstellung (111) in die zweite Verriegelungsstellung (112) bewegbar ist und ausgebildet ist, in der zweiten Verriegelungsstellung (112) das Spannelement (300) in der geschlossenen Spannelementstellung zu verriegeln, und in der ersten Verriegelungsstellung (111) das Spannelement (300) für eine Bewegung in die offene Spannelementstellung zu entriegeln.

12. Sicherungsvorrichtung (100) nach Anspruch 10 oder 11,
wobei das optisch verändernde Element (212) an dem Spannelement (300) angebracht ist; und
wobei das Anzeigeelement (120) an dem Verriegelungselement (110) angebracht ist; und
wobei eine Bewegung des Verriegelungselements (110) von der ersten Verriegelungsstellung (111) in die zweite Verriegelungsstellung (112) das Anzeigeelement (120) unter dem optisch verändernden Element (212) hervorschiebt, so dass die Darstellung des Anzeigeelements (120) nicht durch das optisch verändernde Element (212) optisch verändert ist.
